(19) Europäisches Patentamt

European Patent Office

Office européen des brevets

(11) **EP 1 039 365 A2**

(12) **EUROPEAN PATENT APPLICATION**

(43) Date of publication:
27.09.2000 Bulletin 2000/39

(51) Int. Cl.⁷: **G06F 3/033**

(21) Application number: **00302345.4**

(22) Date of filing: **22.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.03.1999 FI 990676**

(71) Applicant:
**NOKIA MOBILE PHONES LTD.**
**02150 Espoo (FI)**

(72) Inventor: **Vuori, Petri**
**24100 Salo (FI)**

(74) Representative: **Haws, Helen et al**
**Nokia IPR Department,**
**Nokia House,**
**Summit Avenue**
**Farnborough, Hampshire GU14 0NG (GB)**

(54) **An input arrangement for manual entry of data and a mobile phone**

(57) The objective of the invention is a completely new input arrangement for manual entry of data to an electronic device (5) that comprises means to detect a temporary appearance of an obstacle in an input area (7A) outside the main body of the device (5) to determine data input. Further the arrangement comprises means to project a picture on an input area (7A) on a surface (8). A virtual keyboard is projected on this surface (8) in front of or on a folding part of the apparatus in concern. A laser diode and diffractive optics is used to generate an image of the virtual keyboard on the surface (8) and infrared transmitters and receivers (9) are used to detect a pointer or a finger on an exact area of the virtual keyboard. The exact area or position is used to find out the key A - Ö, ENT meant to be pushed. The virtual keyboard is preferably drawn to consist of bright red horizontal and vertical lines as well as letters, numbers and possible special characters as "+" and "-". The lines are bordering the areas of the individual keys. The invention is particularly suitable for a mobile phone.

FIGURE 2A

EP 1 039 365 A2

**Description**

The present invention relates to an input arrangement for manual entry of data forming a keyboard and/or a graphics input pad for a small electronic device and a mobile phone where this arrangement is applied to.

Small mobile phone keyboards with keys 1 - 9, *, 0 and # as well as keyboards of so called communicators with alphanumerical keys reaching from a to z and 1 to 0 are known. These keyboards are small which causes difficulty to use.

Also soft keyboards for electrical equipment are known. These keyboards are usually arranged as a touchscreen on a display.

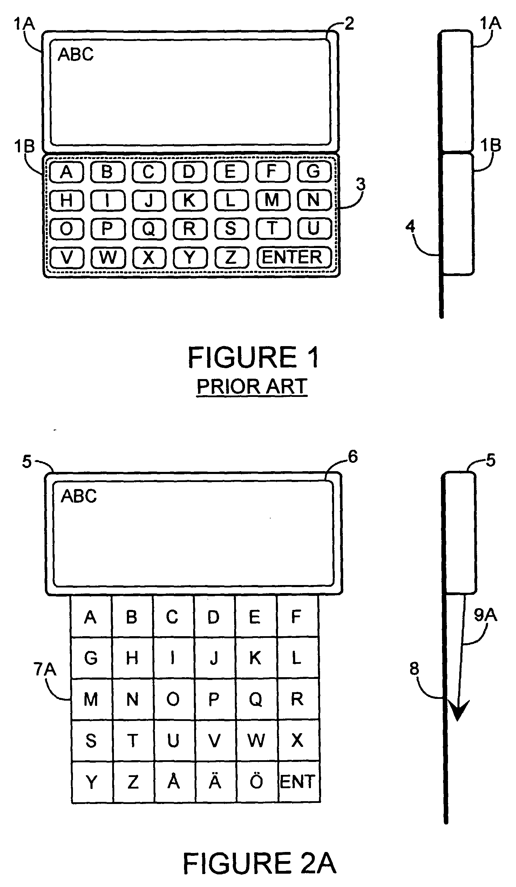

As a problem in the known equipment is the space needed for the keyboard in a small apparatus. This forces to design the keyboard with few or little keys. A known device is represented in Figure 1. A first part 1A is seen containing a display 2 and a second part 1B a keyboard 3. The device 1A, 1B is kept for example on a surface 4 of a table.

The present invention aims to provide a keyboard arrangement that enables a reasonable number of appropriately sized keys to be realized even in a small-sized apparatus.

The invention concerns an input arrangement for manual entry of data to an electronic device housed within a main body. According to one aspect of the invention the arrangement comprises means to detect a temporary appearance of an obstacle in an input area outside the main body of the device to determine input.

The invention concerns also an electronic device. According to a further aspect of the invention the electronic device comprises an input arrangement for manual entry of data with means to project a picture on an input area on a surface and means to detect the appearance of an obstacle on the surface in the input area to determine input.

In consequence of the invention an input area is established in the close vicinity of the apparatus in concern. Advantageously a laser diode and diffractive optics is used to generate an image of a virtual keyboard on a surface and wireless, e.g. infrared transmitters and receivers are used to detect a pointer or a finger on an exact area of the virtual keyboard. The surface is usually a table-top. The exact area or position is used to find out the key meant to be pushed. The virtual keyboard is preferably drawn to consist of bright horizontal and vertical lines as well as letters, numbers and possible special characters as "+" and "-". The lines are bordering the areas of the individual keys. The optical technique for projecting the virtual keyboard is well known.

The position of a pointer within the input area is preferably detected in a first direction extending preferably vertically out from the device from the attenuation of the infrared light and in a second direction parallel to the device from the place of the maximum reflection. The grid made of horizontal and vertical lines guides the user of the device to point in an area of a key. When the pointer crosses an infrared beam of light, it causes reflection that is detected in the device. The infrared beam has to be made very directional to enable detection by reflection of a beam. The detection can be done also by choosing the direction of which the reflection is most effective. Crosstalk of detection between neighbouring directions can be decreased by using different wavelengths in adjacent transmitter receiver pairs. The detection from the attenuation of the infrared light is done using square-attenuation-law $1/r^2$. The reflection voltage is then divided into ranges that are associated to discrete states. These ranges equal rows in the virtual keyboard.

An advantage of the invention is that the device can be made small but a large virtual keyboard can be arranged. It is easy to touch keys that are large enough and all the alphabets can be arranged to the keyboard with discrete keys instead of number keys interconnected to different letters as in a number keypad.

Further advantages of the invention are reduction of cost and weight of the device.

Preferable embodiments of the invention are represented in the dependent claims.

The invention is described in detail in the following by referring to the attached drawings, where

Figure 1     represents a known device with a keyboard,

Figure 2     represents an arrangement with a virtual keyboard and an arrangement with a graphical input pad according to embodiments of the invention,

Figure 3     represents an example of measured IR light reflection intensity,

Figure 4     represents IR light reflection intensity according to an embodiment of the invention,

Figure 5     represents some parts of a device according to the invention in a block diagram,

Figure 6     represents some alternative arrangements for detecting the place of the pointer in the input area, and

Figure 7     represents an arrangement for number key input to an embodiment of the invention in a mobile phone.

Figure 1 is explained in the prior art section above.

In the Figure 2A an arrangement of a device 5 with a display 6 and a virtual keyboard 7A according to an embodiment of the invention is seen. The device 5 is situated on a surface 8 of a table. The device 5 and the virtual keyboard 7A is activated. The virtual keyboard 7A consisting of a text grid is projected from the device 5 using laser light ray 9A to the surface 8. The represented layout of the keyboard 7A is only exemplary and a QWERTY-type layout or any other meaningful layout can be arranged.

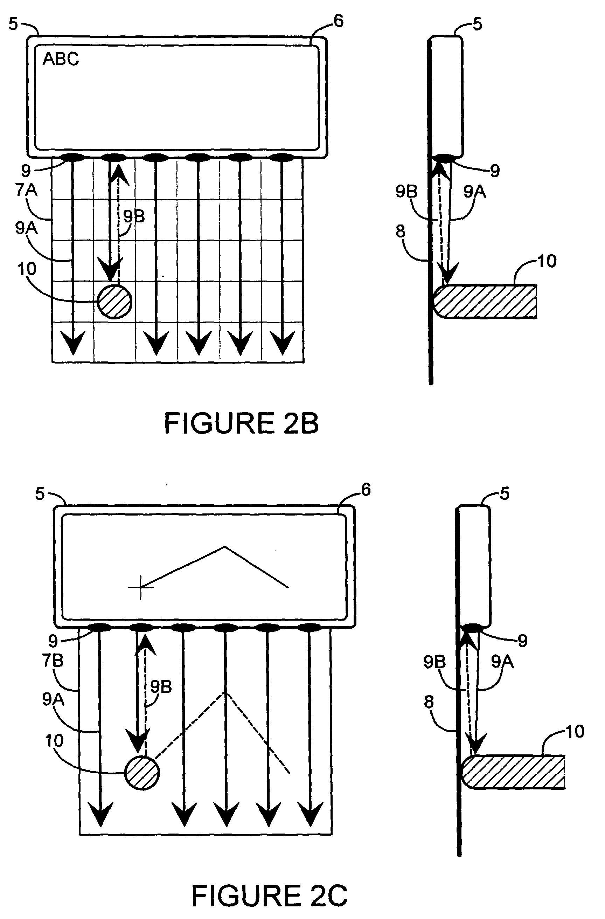

In the Figure 2B is a more specific representation of the arrangement. The device 5 with the display 6 and the virtual keyboard 7 according to the invention and the surface 8 are present. The device 5 comprises infrared light transceivers 9 for all columns of the keyboard. Narrow infrared light beams are transmitted 9A over the columns and received 9B if light is reflected from an obstacle 10 such as a finger or a pointer such as a pen back to the device 5.

In the Figure 2C an arrangement of the device 5 with a display 6 and a virtual drawing plane or graphical input pad 7B according to an embodiment of the invention is seen. The device 5 is situated on a surface 8 of a table. The device 5 and the graphical input pad 7B is activated. The graphical input pad 7B consisting of borders and possibly function keys is projected from the device 5 using laser light ray to the surface 8. The position of the pointer 10 is detected exactly and a crossline for drawing is placed correspondingly on the display 6. Sketching a drawing is done by moving the pointer 10 in the input area 7B and looking at the trace on the display 6. It is also possible to implement a graphical input pad 7B without projecting any picture to the surface 8.

In all Figures 2A, 2B, 2C the device 5 is shown from the front and the side.

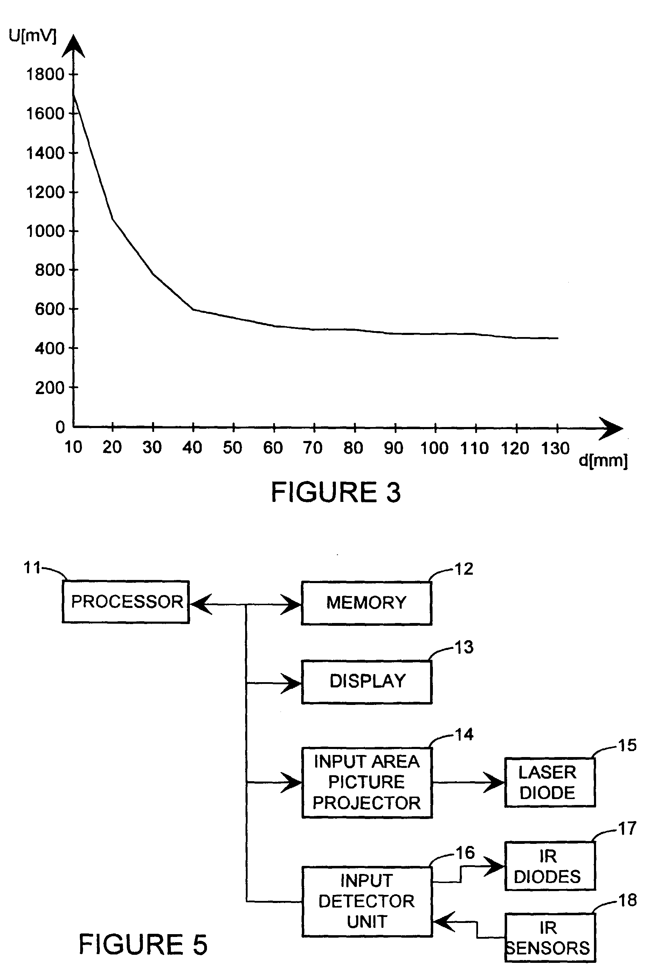

In the Figure 3 is the attenuation described with an example of measured infrared light reflection intensity data from an input arrangement for manual entry of data corresponding to the invention. The infrared light intensity is detected using detectors that output a voltage corresponding to the intensity. The maximum seen output voltage of 1700 mV is naturally reflected nearest to the device. The voltage corresponding to the reflection decreases rapidly below 600 mV that is only little above a noise floor of 400 mV. The measurement data has been acquired by moving a finger in straight line in the direction of the beam and the reflection is measured at 10 mm intervals. The noise floor detected with measurements is mainly caused by leakage flux from the transmitter to the receiver. At least the range from 10 - 70 mm is found to be applicable to the device by this measurement but also distances even to 100 mm could be used. The longest distance is here bound by the leakage flux.

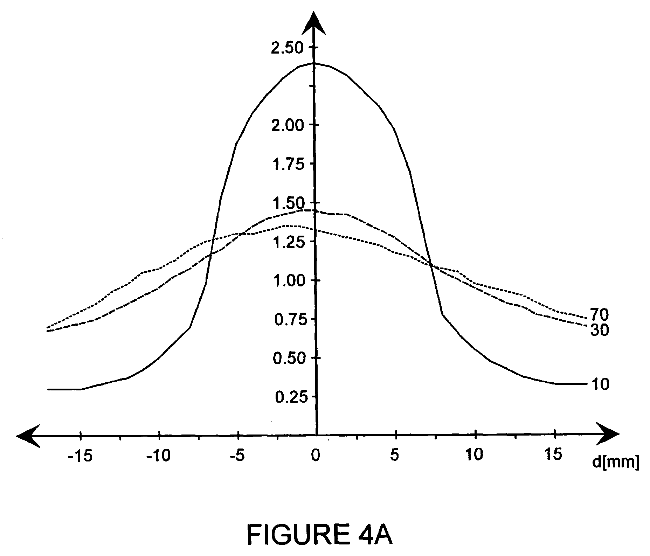

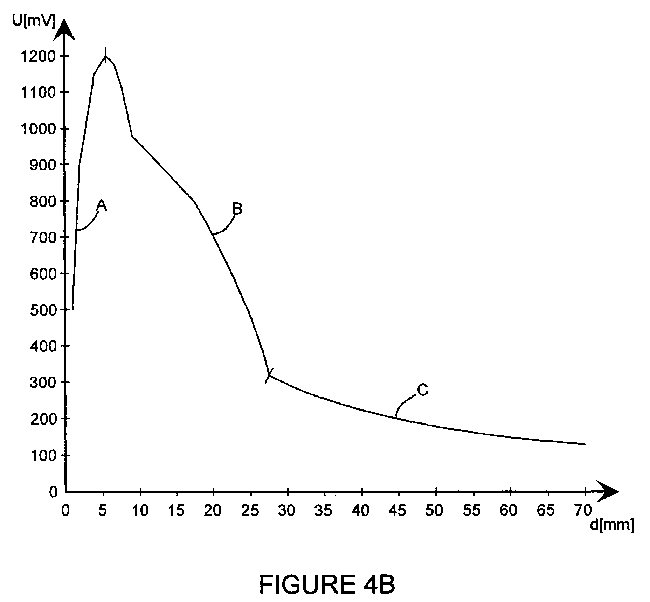

Measured reflection intensity of the IR light according to a prototype of the invention is shown in the Figure 4 in two diagrams.

Measured horizontal reflection curves are shown in the Figure 4A. The curves that are represented here are results of a measurement made by moving a testfinger through one column in the input area in a parallel direction to the side of the device at distances of 10, 30 and 70 mm. Measurement is done at 1 mm intervals. The results of the measurements are normalized to better illustrate proportional change in detecting the reflected light. In the normalized vertical scale the value 1 corresponds to the average of the result in the seen horizontal distance from the middle point. The horizontal movement of 1 mm is possible to be detected even at a distance of 70 mm with one detector. Anyway a more certain detection is achieved by using more than one detector at the same time to detect the position of the obstacle. The detectors can be differentiated by time divisional operation or wavelength. Actual detector voltage difference from a horizontal finger movement of 10 mm from the middle point is 782 mV at a distance of 10 mm, 128 mV at 30 mm, 47 mV at 50 mm and 12 mV at 70 mm.

Measured distance attenuation curve is shown in the Figure 4B. The represented curve is measured by moving a testfinger in a transversal direction to the side of the device to a distance of 70 mm. The result of the measurement is represented in actual value. Three regions of the curve are observed 0 - 5 mm, 6 - 27 mm and 28 - 70 mm. The first region A is affected by a printed circuit board shadowing the receiver, the second region B is dominated by direct reflection from the finger and the third region C is dominated by diffuse reflection from the finger. The diffuse reflection is caused by environmental infrared radiation reflecting from the finger. In addition to the above mentioned the finger itself radiates some infrared light. The amount of the reflection from the finger depends also on fingernails, skin and the size of the finger. A vertical movement of 1 mm is possible to be detected even at a distance of 70 mm. Detector voltage difference from a vertical finger movement of 1 mm is 24 mV at a distance of 10 mm, 9 mV at 30 mm, 4 mV at 50 mm and 3 mV at 70 mm.

It is also possible to implement the key input arrangement of the Figure 2A using only half as many infrared light transceivers compared to what is shown in the Figure 2B. In the Figure 2B the number of the transceivers and key columns is equal. The following is also applicable to the drawing input represented in the Figure 2C. Realisation is possible by simultaneous use of two concurrent transceivers to detect the place of the obstacle in front of the device even between lines perpendicular to the device extending outwards from the transceivers using reflection measurement data represented in the Figures 4A and 4B with calibration. This is based on the width of the measured horizontal reflection curves and the attenuation when the obstacle is moved from the centre line where the reflection is at its maximum. The distance of the obstacle from the device is calculated using a preformed table to correct the higher of the two strongest detected value. The table is formed using attenuation measurement data when calibrating the device. An exemplary table follows:

| | 10 | 9 | 8 | 7 | 6 | 5 | 4 | 3 | 2 | 1 |
|---|---|---|---|---|---|---|---|---|---|---|
| 3.0 | $K_{10,3}$ | $K_{9,3}$ | $K_{8,3}$ | $K_{7,3}$ | $K_{6,3}$ | $K_{5,3}$ | $K_{4,3}$ | $K_{3,3}$ | $K_{2,3}$ | $K_{1,3}$ |
| 2.0 | $K_{10,2}$ | $K_{9,2}$ | $K_{8,2}$ | $K_{7,2}$ | $K_{6,2}$ | $K_{5,2}$ | $K_{4,2}$ | $K_{3,2}$ | $K_{2,2}$ | $K_{1,2}$ |
| 1.0 | $K_{10,1}$ | $K_{9,1}$ | $K_{8,1}$ | $K_{7,1}$ | $K_{6,1}$ | $K_{5,1}$ | $K_{4,1}$ | $K_{3,1}$ | $K_{2,1}$ | $K_{1,1}$ |

The left column of the table shows the absolute voltages 1.0, 2.0, 3.0 of the detector with stronger reading. The top row shows the ratio $V_1/V_2$ where $V_1$, $V_2$ are the voltages of the detectors. The element $K_{X,Y}$ contains a correction factor for correcting the stronger voltage to get a voltage proportional to direct distance from the obstacle to the device.

The horizontal placing of the obstacle is defined nearer to either one of the optical lines reaching vertically out from the transceivers of the device using the ratio $V_1/V_2$. If the ratio is greater than 1, the obstacle is nearer the optical line of the detector 1 and if the ratio is less than 1, the obstacle is nearer the optical line of the detector 2. If the ratio is 1, the obstacle is halfways between the optical lines of the detectors 1 and 2. To find accurate horizontal placing suitable compensation factors has to be used. These factors are arranged in a table for different distances from the device and for different deviations from the optical line of the detector.

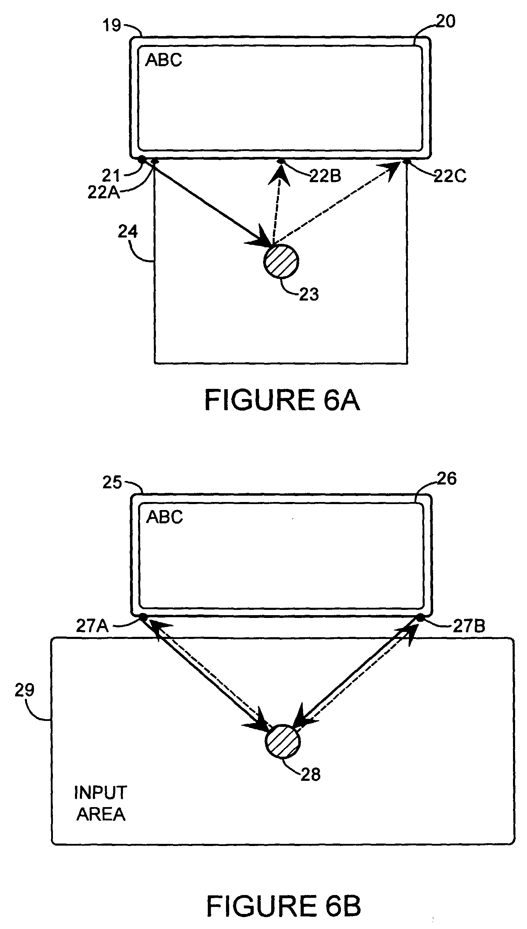

In the Figure 5 some important parts of a device according to an embodiment of the invention are seen in a block diagram. The device comprises a processor 11 to run a program, a memory 12 to record the program, a display 13 to show information, an input area picture projector 14 to control the drawing of a picture to an input area, a laser diode 15 to form light to draw the picture, an input detector unit 16 to detect a pointer in the input area, infrared diodes 17 to form infrared light beams upon the input area and infrared sensors 18 to sense reflection of infrared light from the pointer.

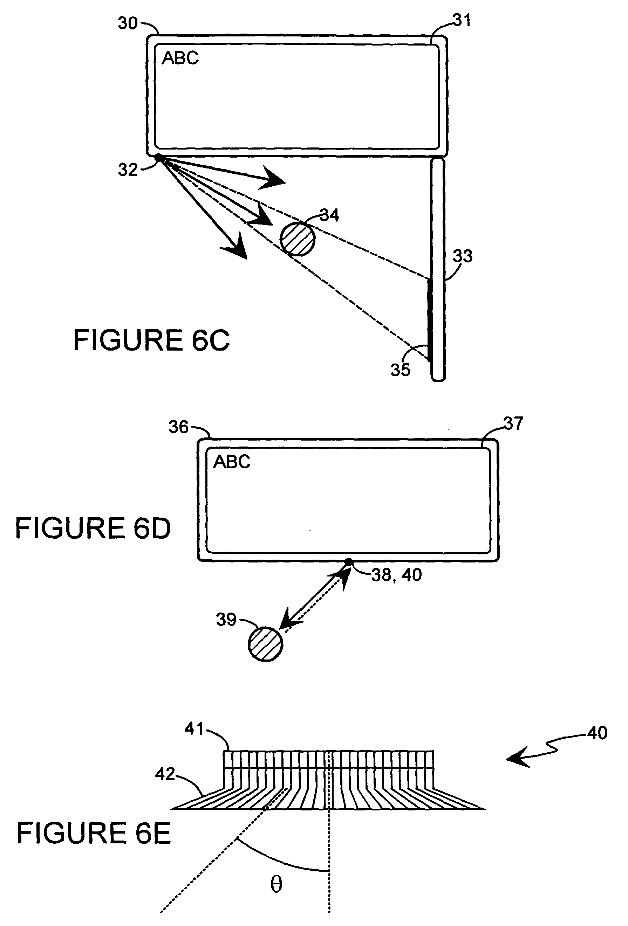

In the Figure 6 alternative arrangements for detecting the place of the pointer in the input area are seen.

In the Figure 6A is a phase-difference detection arrangement. The device 19 comprises a display 20, infrared light transmitter 21 and detectors 22A, 22B, 22C. The position of the pointer 23 in the area of the virtual keyboard 24 is detected by phase-differences in reception of reflected light from the pointer 23 to the detectors 22A, 22B, 22C along the side of the device 19 and the virtual keyboard 24. The distances from the pointer 23 to the detectors 22A, 22B, 22C are calculated using the phase-differences. The distances are calculated using the following equations:

$$\Delta\varphi = 2\pi f\Delta t, \tag{1}$$

$$\Delta t = \Delta r/c, \tag{2}$$

where $\Delta\varphi$ is phase difference, f is frequency, $\Delta t$ is time difference, $\Delta r$ is distance difference and c is speed of light.

$$\Delta r = \frac{\Delta\varphi c}{2\pi f}, \tag{3}$$

the difference of distance $\Delta r$ from the pointer 23 to the detector 22A, 22B, 22C is calculated from the phase difference $\Delta\varphi$. The actual position of the pointer 23 is calculated using distance differences $\Delta r$ to at least three detectors 22A, 22B, 22C. The possible distance differences $\Delta r$ can be arranged in a table to easily find corresponding x, y coordinates or virtual keys. This arrangement is independent on transmitter characteristics neither is a uniform infrared field needed.

The infrared light transmitter 21 and the detectors 22A, 22B, 22C can be replaced with acoustical ones in all embodiments of the invention. Sound propagation speed in air is approximately 340 m/s at room temperature. Propagation of 1 mm in 3 μs is detectable with detectors 22A, 22B, 22C. This enables a resolution of circa 1 mm in all places of the input area.

In the Figure 6B is a polar-radiator detection arrangement. The device 25 comprises a display 26 and omnidirectional transmitter/receivers 27A, 27B. The pointer 28 is in an input area or the area of the virtual keyboard 29. The transmitter/receivers 27A, 27B send infrared light, the light reflects from the pointer 28 and is received preferably by the same transmitter/receiver 27A, 27B. The transmitter/receivers 27A, 27B can use different wavelength and/or time of a pulsed transmission to differentiate from each other. Attenuation of light is used to determine the distance of the pointer from the transmitter/receivers 27A, 27B.

A minimum number of two transceivers are needed for a polar detection arrangement, but the accuracy can be enhanced using three or more transceivers.

In the Figure 6C is a shadow-based detection arrangement. The device 30 comprises display 31, infrared light transmitter 32 and a photodetector strip 33. The position of the pointer 34 is detected by measuring the place and size of the shadow 35 of the pointer 34 on the photodetector strip 33. The pointer 34 has to be of a known constant size to enable reliable detection of the distance between the transmitter 32, pointer 34 and the shadow 35. The shadow 35 grows when the pointer 34 is moved towards the transmitter 32 and shrinks when the pointer 34 is moved towards the photodetector strip 33. Also the sharpness of the shadow 35 can be used to determine or confirm the result. The shadow 35 becomes blunt when the pointer 34 is moved towards the transmitter 32 and sharpens when the pointer 34 is moved towards the photodetector strip 33.

It is also possible to make a matrix-type detection arrangement where there are both intensity and shadow-based detection equipment in the same device. The different detection systems are used parallel to measure the vertical position with the first and the horizontal position with the second method. This structure is anyhow slightly more complicated and expensive to manufacture.

In the Figure 6D is a centre radiator arrangement. The device 36 comprises a display 37, an infrared light transmitter 38 and a receiver 40. The transmitter 38 sends infrared light to all horizontal directions. The light reflects from an obstacle 39 to the receiver 40 of the device.

In the Figure 6E is the receiver 40 of the arrangement of the Figure 6D represented. The reflected light from the obstacle 39 arrives in an angle θ to the normal of the device. The receiver 40 comprises a row of detectors 41 and a set of photoconductors 42. Every individual photoconductor has a known angle of incidence compared to the normal. The incidence of the reflection is found out as a light detection in a detector of that angle. If the reflection is detected by many detectors the angle of incidence is found out by the strongest detection. The distance to the obstacle is calculated from the attenuation as above.

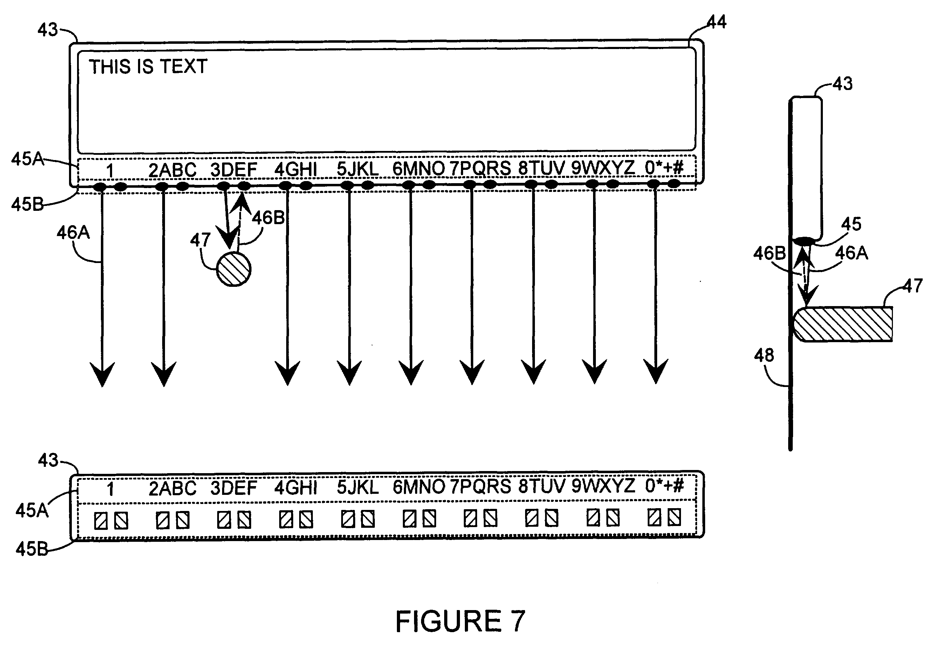

In the Figure 7 is an arrangement for number key input according to an embodiment of the invention in a mobile phone. The mobile phone 43 comprises a display 44, number key markings 45A on the phone and transmitters and receivers 45B on the side of the phone. Transmitters emit infrared light rays 46A that reflect 46B back to the phone 43 from an obstacle 47 if one is present. The phone can be kept on a surface 48 but it is not necessary using this embodiment of the invention. The key input is preferably arranged as in a known mobile phone allowing text input by sequential key strikes on a key.

The following example is represented to explain the invention for inputting text. The word "ice" is written and entered using the virtual keyboard according to the invention. The user switches on the device 5, the display 6 and the virtual keyboard 7. The laser diode is used to form an illusion of a keyboard on a surface 8 in front of the device. The user put his finger on the place where letter "I" is projected and an infrared light beam is reflected back from the finger on the column of the keyboard where the letter is placed. The reflection is recognized in the device 5 and a letter "I" is input as well as drawn to the display 6. Then the user put his finger on letter "C" and then on letter "E" and the corresponding letters are input to the device 5 and shown on the display 6. Inputting the word is ended by putting finger on the picture of the key ENT (Enter).

A virtual keyboard with 8 * 7 square keys of 10 mm side length has been found suitable. Pushes to the keys of this keyboard can be read reliably.

The input area can be at least in front of the device as well as on a side of the device. Further it is possible to form a round shaped device and arrange the input area round. One example of a round device is a watch with the arrangement of the invention on a circular bezel or the case. The input area can also be arranged on a special surface that is a folding part of the device.

An obstacle in sense of this text can at least be a finger, a pen or a special pointing stick.

Calibration before use is usually needed. This depends on the form and quality of the source infrared field. In strong light the transmission and reception of the infrared light has to be filtered to a specified wavelength to differentiate from the lighting of the environment.

Current consumption of a certain prototype of the virtual keyboard according to the invention is 1 - 2 mA RMS (Root-Mean-Square) in the above represented size. The size on the keyboard can however be enlarged by changing alignment of the laser optics and fortifying the infrared light transmission. This increases current consumption. Infrared emission is preferably pulsed to reduce current consumption.

Windows for infrared light are not necessarily needed in the cover of the electronic device if cover plastics that let infrared light pass through are used.

The terms column and row describing the virtual keyboard in this text are only exemplary. The structure of the keyboard can differ from the above shown. The direction of the keyboard compared to the device can also differ. The keyboard can be for example on a side of the device.

A further target is sensing dynamically the lowering and the rising of the finger to enter lower case letters or capital letters by making shallower or deeper press.

It is also possible to arrange multiple input areas to cover different input methods. One possibility is to arrange a virtual drawing plane on the left, a virtual keyboard on the front and a virtual number keyboard on the right side of the device.

## Claims

1. An input arrangement for manual entry of data to an electronic device housed within a main body, **characterized** in that the input arrangement comprise means (9; 16, 17, 18) to detect a temporary appearance of an obstacle (10) in an input area (7A, 7B) outside the main body (5) of the device to determine input.

2. An arrangement according to the Claim 1, **characterized** in that the means (16) to detect placing of the obstacle (10) comprise an infrared transmitter to emit infrared radiation into the input area (7A, 7B) and a receiver to measure infrared radiation reflected from the obstacle.

3. An arrangement according to the Claim 1, **characterized** in that the means (16) to detect placing of the obstacle (10) comprise means (11, 12, 13) to calibrate preprogrammed correlation data for a user by placing the obstacle (10) on a specified place in the input area (7A, 7B).

4. An arrangement according to the Claim 1, **comprising** means (14) to project a picture on the input area (7A, 7B) on a surface (8).

5. An arrangement according to the Claim 4, **characterized** in that the surface (8) is a flat external surface which the device (5) lies on.

6. An arrangement according to the Claim 4, **characterized** in that the surface is on a folding part of the device.

7. An arrangement according to the Claim 4, **characterized** in that the means (14) to project the picture on the input area comprise laser optics (15).

8. An arrangement according to the Claim 4, **characterized** in that the projected picture on the input area (7A) represents a virtual keyboard comprising at least a row of virtual keys and means (16, 17, 18) to detect the temporary appearance of the obstacle (10) are arranged to determine a keypush of the virtual keyboard.

9. An arrangement according to the Claim 8, **characterized** in that the means (16, 17, 18) to detect the temporary appearance of the obstacle (10) are arranged to determine the row of the key pushed by measuring the intensity of the reflection and preprogrammed correlation data for attenuation compared to the distance of the obstacle.

10. An arrangement according to the Claim 8, **characterized** in that the means (16, 17, 18) to detect the temporary appearance of the obstacle (10) are arranged to determine the position of the key pushed in a row is determined by measuring the intensity of the reflection and using preprogrammed correlation data for attenuation compared to the distance of the obstacle.

11. An arrangement according to the Claim 4, **characterized** in that means (14) to project a picture on the input area are arranged to project borders of a graphical input pad (7B) and means (16, 17, 18) to detect the temporary appearance of the obstacle (10) are arranged to determine graphical input on the graphical input pad (7B).

12. An arrangement according to the Claim 11, **characterized** in that means (16, 17, 18) to detect the temporary appearance of the obstacle (10) comprise at least one directional infrared transmitter and receiver pair (9) for the input area to determine the horizontal place of the intended input by sensing reflection.

13. An arrangement according to the Claim 11, **characterized** in that means (16, 17, 18) to detect the temporary appearance of the obstacle (10) are arranged to determine the vertical place of the intended input by measuring the intensity of the reflection and preprogrammed correlation data for attenuation compared to the distance of the obstacle (10).

14. An arrangement according to the Claim 1, **characterized** in that means (16, 17, 18) to detect the temporary appearance of the obstacle (10) in an input area outside the main body of the device (5) to determine input are arranged to read number key entry and the input area consists of a plane extending out from the side of the device (5).

**15.** An electronic device, **characterized** in that the electronic device comprises an input arrangement for manual entry of data with means (14, 15) to project a picture on an input area on a surface and means (16, 17, 18) to detect the temporary appearance of the obstacle (10) on the surface in the input area to determine input.

**16.** An electronic device according to the Claim 15, **characterized** in that the device (5) further comprises

- a processor (11) to run a program,

- a memory (12) to record the program,

- a display (13) to show information, and

the means to project a picture comprise

- an input area picture projector (14) to control drawing of a picture to the input area,

- a laser diode (15) to form light to draw the picture, and

the means to detect placing an obstacle on the surface comprise

- an input detector unit (16) to detect a pointer in the input area,

- infrared diodes (17) to form infrared light beams upon the input area, and

- infrared sensors (18) to sense reflection of infrared light from the pointer.

**17.** An electronic device according to the Claim 15, **characterized** in that the electronic device (5) is a mobile phone.

1A ABC 2

| A | B | C | D | E | F | G |
| H | I | J | K | L | M | N |
| O | P | Q | R | S | T | U |
| V | W | X | Y | Z | ENTER |

1B 3

1A 1B 4

## FIGURE 1
### PRIOR ART

5 ABC 6

| A | B | C | D | E | F |
|---|---|---|---|---|---|
| G | H | I | J | K | L |
| M | N | O | P | Q | R |
| S | T | U | V | W | X |
| Y | Z | Å | Ä | Ö | ENT |

7A 5 9A 8

## FIGURE 2A

ABC

FIGURE 2B

FIGURE 2C

U[mV]

1800
1600
1400
1200
1000
800
600
400
200
0

10  20  30  40  50  60  70  80  90  100  110  120  130    d[mm]

## FIGURE 3

11 — PROCESSOR ⟷ MEMORY —12

→ DISPLAY —13

→ INPUT AREA PICTURE PROJECTOR —14 → LASER DIODE —15

—16 → IR DIODES —17

→ INPUT DETECTOR UNIT ← IR SENSORS —18

## FIGURE 5

**FIGURE 4A**

FIGURE 4B

ABC

FIGURE 6A

ABC

INPUT
AREA

FIGURE 6B

ABC

30     31

32

34

33

35

## FIGURE 6C

ABC

36     37

38, 40

39

## FIGURE 6D

40

41

42

$\theta$

## FIGURE 6E

FIGURE 7

EP 1 039 365 A2